# EUROPEAN PATENT APPLICATION

(11) **EP 2 120 406 A1**
(43) Date of publication of application: **18.11.2009**
(21) Application number: 08700039.4
(22) Date of filing: 03.01.2008
(51) Int. Cl.: H04L 12/56

(54) **METHOD AND SYSTEM FOR PROCESSING THE CALL**

(30) Priority: 13.04.2007 CN 200710074034
(71) Applicant: Huawei Technologies Co., Ltd., Longgang District, Shenzhen Guangdong 518129 (CN)
(72) Inventor: MA, Qifeng, Shenzhen Guangdong 518129 (CN); XU, Wenhua, Shenzhen Guangdong 518129 (CN); LI, Yan, Shenzhen Guangdong 518129 (CN)
(74) Representative: Pfenning, Meinig & Partner GbR
(86) International application number: PCT/CN2008/070012
(87) International publication number: WO 2008/125024

(57) **Abstract**

The present disclosure relates to communication field. A method and system for call processing are provided according to the present disclosure. The method for call processing includes: collecting and storing configuration information on voice call continuity configured by a user; getting the configuration information based on a user identification upon receipt of the call initiated by a user terminal from the first domain; determining whether to connect the call to a second domain based on the configuration information, and performing a corresponding connection processing. According to the embodiments of the present disclosure, VCC related information is pre-configured in the CS domain or in the IMS domain, so that the GSMSCF may perform related operations based on the information during subsequent procedures for call processing. As such, the user may voluntarily select whether the VCC processing is required for some calls or not. If there is no need for the VCC processing, it is faster to connect the call of the user to thereby avoid a long waiting time for the user.

## Description

### FIELD OF THE INVENTION

The present disclosure relates to communication field, more specifically, to a method and system for call processing.

### BACKGROUND

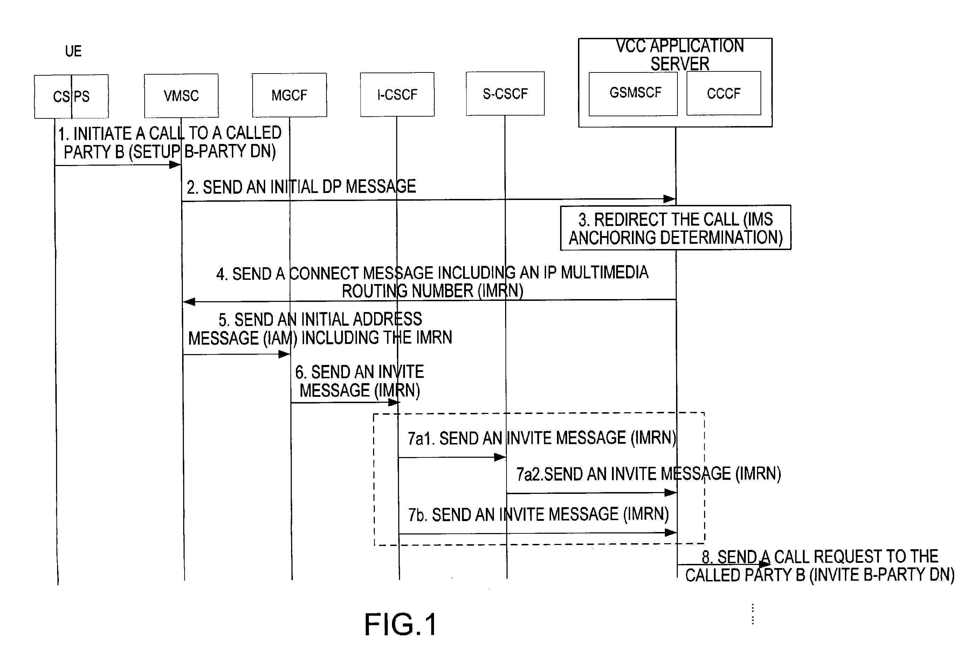

Currently, the Third Generation (3G) technology is gradually growing up and is brought into commercial practice in many countries and districts over the world. The proposal of Internet protocol Multimedia Subsystem (IMS) offers a solution in terms of multimedia services in a mobile network. A 3G network is divided into different domains including a Circuit Switched (CS) domain, a Packet Switched (PS) domain, and an IMS domain. The CS domain provides voice and multimedia services using a circuit switching technology in a way similar to a 2G system. The PS domain provides users with IP connectivity for accessing Internet. The IMS domain takes a Session Initiation Protocol (SIP) as the main communication protocol to provide users with IP based multimedia services. In the 3G network, user terminals may connect to the network via the CS domain or the PS domain respectively. During a conversation, the user is allowed to switch between the different network domains without interrupting the active session. For instance, the user is in the conversation over the CS domain, however, the present signal in the CS domain is rather weak already whereas the signal in the IMS domain is quite strong. At this point, it is better to switch the conversation to the IMS domain for a better conversation quality. The Third Generation Partnership Projects (3GPP) organization is engaged in constituting service specifications and requirements for uninterrupted controls over voices switched between the CS domain and the IMS domain. In a recent 3GPP-R7 version, a further analysis and study is in progress to provide a solution to the uninterrupted switchover for calls under the control of the IMS domain. In the solution, it is required that calls from the CS domain must pass through a Voice Call Continuity (VCC) application server in the IMS domain, in order to prepare for a subsequent voice switchover in advance. A specific implementation flowchart is illustrated in Figure 1 and detailed as follows.

1. A user supporting the VCC initiates a call to a called party B via a User Equipment (UE).

2. A Visit Mobile service Switching Center (VMSC) detects a related trigger, and sends an Initial detection point (IDP) message to a Global System Mobile Service Control Function (GSMSCF).

3. The GSMSCF redirects the call to the IMS domain (IMS anchoring determination) when detecting that the call supports the VCC.

4. The GSMSCF allocates an IP Multimedia Routing Number (IMRN), and instructs the MSC to connect the call to the IMS domain by a Connect message.

5. The MSC sends an Initial Address Message (IAM) to a Media Gateway Control Function (MGCF) based on the IMRN.

6. The MGCF sends an SIP Invite message to a Call Session Control Function (CSCF).

7. The CSCF triggers the call to a Call Continuity Control Function (CCCF).

8. The CCCF sends a call request to the called party B again.

It is noted that the above connection procedure is quite complex, where all the calls initiated from the CS domain are connected to the VCC application server in the IMS domain in order to prepare for the VCC switchover, thereby resulting in a long time for connecting calls for users. Moreover, it is not required that each call initiated from users needs the VCC switchover. Therefore, the current practice of connecting all the calls to the VCC application server in the IMS domain certainly causes inconveniences for use and adverse experiences of users.

### SUMMARY

Embodiments of the present provide a method for call processing, in order to solve the problem existing in conventional technology. The problem lies in that the users are not allowed to voluntarily select a VCC process for its calls, and all the calls are connected to the VCC application server in the IMS domain, thereby resulting in a long time for connecting calls and adverse experiences of users.

Embodiments of the present disclosure also provide a system for call processing, in order to solve the problem existing in conventional technology. The problem lies in that the users are not allowed to voluntarily select a VCC process for its calls, and all the calls are connected to the VCC application server in the IMS domain, thereby resulting in a long time for connecting calls and adverse experiences of users.

Embodiments of the present disclosure are implemented as below. A method for call processing is provided, and the call is initiated from a first domain in a communication network. The method includes the following:
collecting and storing configuration information on voice call continuity configured by a user;
getting the configuration information based on a user identification upon receipt of the call initiated by a user terminal from the first domain;
determining whether to connect the call to a second domain based on the configuration information, and performing a corresponding connection processing.

A system for call processing is provided, and the call is initiated from a circuit switched domain in a communication network. The system includes a Global System Mobile Service Control Function (GSMSCF), a Mobile service Switching Center (MSC) and a Voice Call Continuity (VCC) application server, the VCC application server includes:
a configuration information managing module, configured to store configuration information on voice call continuity submitted by a user via the circuit switched domain or via an Internet protocol Multimedia Subsystem (IMS) domain;
the Global System Mobile Service Control Function includes:
a voice call continuity processing module, configured to request the configuration information from the configuration information managing module based on an identification of a user who initiates the call from the circuit switched domain, and determine whether to connect the call to the IMS domain based on the configuration information, and instruct the MSC to perform a corresponding connection processing.

According to the embodiments of the present disclosure, the VCC related information is pre-configured in the CS domain or in the IMS domain, so that the GSMSCF may perform the corresponding processing based on the information therein during subsequent call processing procedures. Therefore, the user may voluntarily select whether the VCC processing is required for some calls. When the VCC processing is not required, the connection for the calls from the user may become faster, thereby avoiding a long waiting time for the user and improving the satisfaction rating of the user.

### BRIEF DESCRIPTION OF THE DRAWINGS

Figure 1 is an implementing flowchart of a method for call processing in the 3GPP protocol according to conventional technology;

Figure 2 is a networking schematic view of a system according to an embodiment of the present disclosure;

Figure 3 is an implementing flowchart of a method for call processing according to an embodiment of the present disclosure; and

Figure 4 is an implementing flowchart of a method for call processing according to a preferred embodiment of the present disclosure.

### DETAILED DESCRIPTION

The purpose, technical solutions and advantages concerning the present disclosure will become more readily appreciated by reference to the following description of the embodiments, when taken in conjunction with the accompanying drawings. It should be understood that the embodiments described herein are merely illustration of the present disclosure and are not limiting in these respects.

According to the embodiments of the present disclosure, VCC related information is pre-configured in the CS domain or in the IMS domain, so that the GSMSCF performs related operations based on the information during subsequent procedures for call processing. As such, the users may voluntarily select whether the VCC processing is required for some calls or not. If the VCC processing is not required, it is faster to connect the calls for the users.

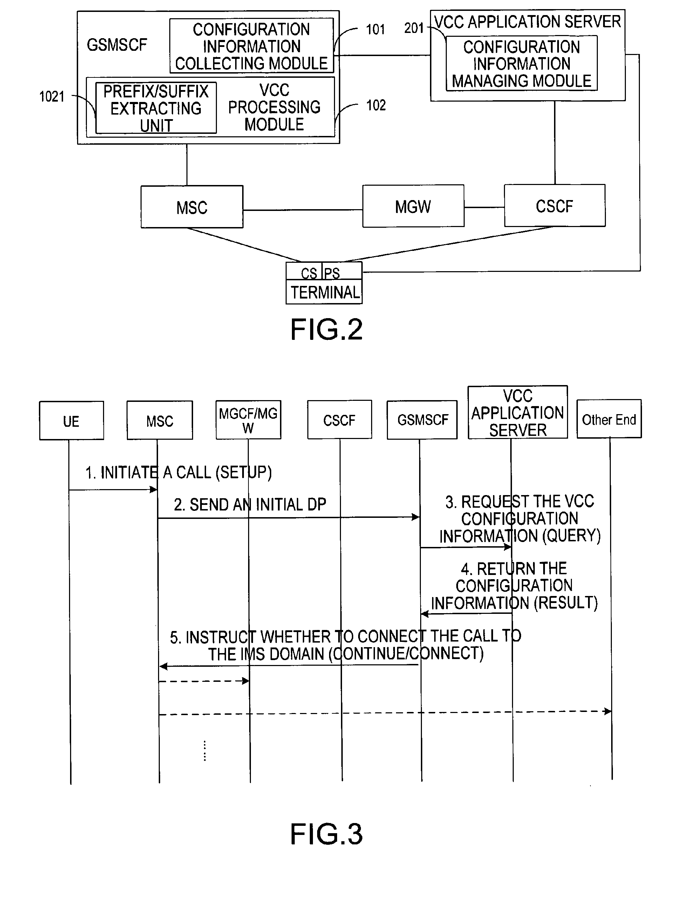

Figure 2 illustrates a networking schematic view of a system according to an embodiment of the present disclosure. User terminals may connect to the network via the CS domain or via the PS domain respectively. During a conversation, it allows the user to switch between the different network domains while not interrupting the session in progress. For instance, the user registers in the IMS domain in the beginning, and then initiates a call. A VCC service is triggered by the CSCF to thereby complete a connection control process and enter into a conversation. The user terminal may register to the CS domain in the network by reason of the user or the network, and initiate a request to the VCC application server for a call switchover and for an establishment of conversation links between the terminal and the MSC, and between the terminal and the Media Gateway (MGW). In the control of the VCC application server, the conversation switchover from the initial IMS domain to the CS domain is completed. The VCC application server instructs to release the IMS conversation, thereby implementing the procedure of the conversation switchover from the IMS domain to the CS domain eventually. The GSMSCF includes a configuration information collecting module 101 and a VCC processing module 102. The VCC application server includes a configuration information managing module 201. The configuration information collecting module 101 collects VCC configuration information of the user, and submits it to the configuration information managing module 201 in the VCC application server, wherein the VCC configuration information may include a calling/called number, a number feature (e.g. a number field), or a required switchover time period, etc.

According to an embodiment of the present disclosure, the configuration information collecting module 101 includes a segment of service management logic which instructs an intelligent apparatus in the CS domain to play announcement to the user in order to collect the VCC configuration information of the user. For instance, the GSMSCF connects the call to the intelligent apparatus after the user dials a management procedure, and instructs the intelligent apparatus to play announcement which reminds the user to select a function. An example of a playing announcement by the intelligent apparatus to remind the user to configure information is shown below:
1. Default configurations

| User ID | Default processing : <1: support VCC\|0: not support VCC> |
|---|---|
| 22222222222 | 0 (indicating that none calls from the user requires a connection to the VCC application server in the IMS domain) |

2. Specific configurations

| Sequence number | Number: <other number\| number field> | VCC identification : <1: support VCC\|0: not support VCC> |
|---|---|---|
| 1 | 7654321 | 1 (indicating that all calls to the number of 7654321 from the user requires a connection to the VCC application server in the IMS domain) |

The user may select option 1 or option 2 to modify related configurations during the process of announcement played by the intelligent apparatus after the user dials the management procedure. Suppose that option 2 is selected by the user, the user may further select operations such as query (option 1), add (option 2), modification (option 3), or deletion (option 4), and so forth. The configuration information collecting module 101 sends the configuration information to the configuration information managing module 201 in the VCC application server after the configuration information of the user is collected.

According to another embodiment of the present disclosure, the user may directly configure the VCC by interacting with the VCC application server via the IMS domain, since the SIP protocol is available in the IMS domain. For instance, by a direct interaction with the VCC application server via maintenance interfaces or instructions of a client end, related configuration information (such as the VCC configuration information of the user, a corresponding relationship between the IMS identification of the user and the CS identification, and so forth) is stored into the configuration information managing module 201 in the VCC application server.

According to the above VCC configurations, the VCC processing module 102 in the GSMSCF requests the configuration information from the configuration information managing module 201 based on the user identification when the user initiates a call in the CS domain. For instance, when the user initiates a call to the called number 7654321, the MSC triggers a GSMSCF service upon receipt of the call request. The VCC processing module 102 requests the VCC related configuration information from the configuration information managing module 201, where a request message includes the user ID 22222222222 and the called number 7654321. The configuration information managing module 201 returns the VCC identification to the VCC processing module 102 by matching with the related configuration information. The VCC processing module 102 determines whether the call supports the VCC processing based on the VCC identification. For instance, it indicates that the call supports the VCC processing when the VCC identification is marked as 1, and therefore the VCC processing module 102 instructs the MSC to connect the call to the IMS domain; otherwise, it indicates that the call does not support the VCC processing when the VCC identification is marked as 0, and therefore the VCC processing module 102 instructs the MSC to proceed to a normal service.

A specific implementation flowchart is illustrated in Figure 3 and detailed as follows.

1. The UE initiates a call.

2. The MSC sends an Initial DP to the GSMSCF to trigger a service after detecting the call.

3. The GSMSCF requests the VCC configuration information from the VCC application server.

4. The VCC application server returns a corresponding VCC identification based on the information carried in the request message.

5. The GSMSCF analyses whether the call supports the VCC processing based on the returned VCC identification. If the call supports the VCC processing, the GSMSCF sends a Connect message to request the MSC to connect the call to the IMS domain; otherwise, the GSMSCF sends a Continue message to request the MSC to proceed to a normal connection.

The above embodiments are illustrated with the VCC configuration information being a calling number and a called number. Similarly, when the VCC configuration information is a number feature or a time period, it indicates that a corresponding VCC processing is required for the calls of which the called number is in accordance with the number feature, or for the calls initiated in the time period by the user. The subsequent procedures concerning the connection to the IMS domain by the MSC may refer to the existing 3GPP related specifications, which is omitted herein.

According to another embodiment of the present disclosure, it is determined that whether the call requires the VCC processing based on a special prefix or suffix attached to the called number. For instance, an appointed special prefix of 333 indicates that the VCC processing is required, so that when the user initiates a call to a called number of 3337654321, the VCC processing is performed on the call. Accordingly, the VCC processing module 102 in the GSMSCF further includes a prefix/suffix extracting unit 1021, which is configured to instruct the MSC to perform the corresponding connection processing after the prefix/suffix is extracted.

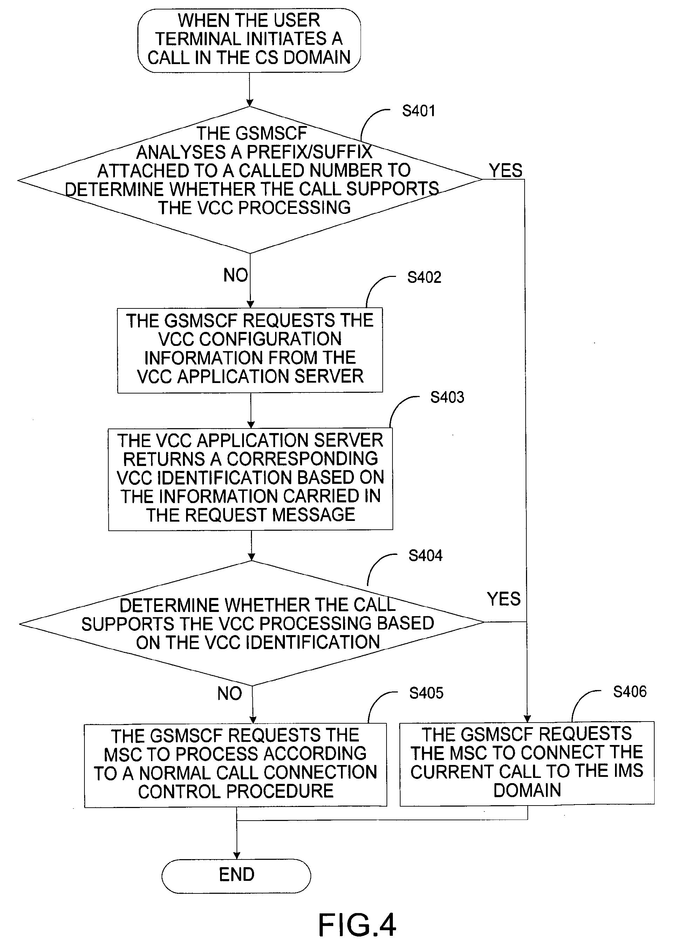

According to a preferred embodiment of the present disclosure, it is determined that whether a call from the user requires a VCC processing based on both the analysis of a prefix/suffix attached to a called number, and the VCC related information pre-configured in the CS domain or in the IMS domain. A specific call processing flowchart is illustrated in Figure 4 and detailed as follows.

At step S401, when the user terminal initiates a call in the CS domain, the GSMSCF analyses a prefix/suffix attached to a called number to determine whether the call supports the VCC processing. If it is determined that the call supports the VCC processing, step S406 is performed; otherwise, step S402 is performed.

At step S402, the GSMSCF requests the VCC configuration information from the VCC application server.

At step S403, the VCC application server returns a corresponding VCC identification based on the information carried in the request message.

At step S404, it is determined whether the call supports the VCC processing based on the VCC identification. If it is determined that the call supports the VCC processing, step S406 is performed, otherwise, step S405 is performed.

At step S405, the GSMSCF requests the MSC to process according to a normal call connection control procedure.

At step S406, the GSMSCF requests the MSC to connect the current call to the IMS domain.

The above processing procedure is more flexible, where it is determined whether a call from the user requires a VCC processing based on both the analysis of a prefix/suffix attached to a called number, and the VCC related information pre-configured in the CS domain or in the IMS domain. As a result, it provides the user with several solutions to voluntarily select whether the call requires the VCC processing.

According to the embodiments of the present disclosure, the VCC related information is pre-configured in the CS domain or in the IMS domain, so that the GSMSCF performs the corresponding processing based on the information therein during the subsequent call processing procedure. Therefore, the user may voluntarily select whether some calls require the VCC processing. When no VCC processing is required, the connection for the calls from the user may become faster, to thereby avoid a long waiting time for the user and improve the satisfaction rating of the user. Furthermore, it may instruct the GSMSCF whether a current call requires a VCC processing in a manner such as temporarily adding a prefix or a suffix and so forth. As a result, it provides the user with several solutions to voluntarily select whether the call requires the VCC processing.

The foregoing is merely preferred embodiments of the present disclosure, which not be construed as limitation to the present disclosure. Any modifications, equivalents, improvements, etc., made within the spirit and principle of the present disclosure shall fall within the scope of the present disclosure.

## Claims

1. A method for call processing, wherein the call is initiated from a first domain in a communication network, **characterized by** comprising:
collecting and storing configuration information on voice call continuity configured by a user;
getting the configuration information based on a user identification upon receipt of the call initiated by a user terminal from the first domain;
determining whether to connect the call to a second domain based on the configuration information, and performing a corresponding connection processing.

2. The method of claim 1, **characterized in that**, the first domain is a circuit switched domain, and the second domain is an Internet protocol Multimedia Subsystem domain.

3. The method of claim 1, **characterized in that**, the configuration information on voice call continuity comprises a calling number, a called number, a number feature, or a required switchover time period.

4. The method of claim 2, **characterized in that**, the step of collecting configuration information on voice call continuity configured by a user is implemented by playing announcement via an intelligent apparatus of circuit switched domain.

5. The method of claim 2, **characterized in that**, the step of collecting configuration information on voice call continuity configured by a user is implemented by a direct interaction with a voice call continuity application server via maintenance interfaces or instructions of a client end in the IP multimedia subsystem domain.

6. The method of claim 1, **characterized in that**, upon receipt of the call initiated by a user terminal, prior to the step of getting the configuration information on voice call continuity, the method further comprises:
determining whether to connect the call to the second domain based on a prefix or a suffix attached to the called number; connecting the call to the second domain if it is determined to connect the call to the second domain; proceeding to the step of getting the configuration information on voice call continuity and subsequent steps if it is determined not to connect the call to the second domain.

7. A system for call processing, wherein the call is initiated from a circuit switched domain in a communication network, and the system comprises a Global System Mobile Service Control Function, a Mobile service Switching Center and a Voice Call Continuity application server, **characterized in that**, the Voice Call Continuity application server comprises:
a configuration information managing module, configured to store configuration information on voice call continuity submitted by a user via the circuit switched domain or via an Internet protocol Multimedia Subsystem domain;
the Global System Mobile Service Control Function comprises:
a voice call continuity processing module, configured to request the configuration information from the configuration information managing module based on an identification of a user who initiates the call from the circuit switched domain, determine whether to connect the call to the Internet protocol Multimedia Subsystem domain based on the configuration information, and instruct the Mobile service Switching Center to perform a corresponding connection processing.

8. The system of claim 7, **characterized in that**, the configuration information on voice call continuity comprises a calling number, a called number, a number feature, or a required switchover time period.

9. The system of claim 7, **characterized in that**, the voice call continuity processing module further comprises:
a prefix/suffix extracting unit, configured to determine whether to connect the call to the Internet protocol Multimedia Subsystem domain based on a prefix or a suffix attached to a called number before the voice call continuity processing module requests the configuration information from the configuration information managing module.

10. The system of claim 7, **characterized in that**, the Global System Mobile Service Control Function further comprises:
a configuration information collecting module, configured to collect the configuration information on voice call continuity of the user in the circuit switched domain, and submit the configuration information to the configuration information managing module in the Voice Call Continuity application server.

11. The system of claim 10, **characterized in that**, the configuration information collecting module comprises:
an intelligent apparatus of circuit switched domain, configured to collect the configuration information on voice call continuity of the user by playing announcement to the user.
